# EUROPÄISCHE PATENTSCHRIFT

(11) **EP 2 649 756 B1**
(45) Veröffentlichungstag und Bekanntmachung des Hinweises auf die Patenterteilung: **11.10.2017**
(21) Anmeldenummer: 11794032.0
(22) Anmeldetag: 01.12.2011
(51) Int. Cl.: H04L 12/403, H04L 12/46, H04L 12/40

(54) **VERFAHREN ZUM BETRIEB EINES BORDNETZES EINES KRAFTFAHRZEUGS SOWIE DANACH ARBEITENDES BUSSYSTEM**
METHOD FOR OPERATING AN ELECTRICAL SYSTEM OF A MOTOR VEHICLE AND BUS SYSTEM OPERATING IN ACCORDANCE WITH SAID METHOD
PROCÉDÉ POUR FAIRE FONCTIONNER UN RÉSEAU DE BORD D'UN VÉHICULE À MOTEUR, ET SYSTÈME DE BUS FONCTIONNANT D'APRÈS CE PROCÉDÉ

(30) Priorität: 08.12.2010 DE 102010053803
(43) Veröffentlichungstag der Anmeldung: 16.10.2013
(73) Patentinhaber: Brose Fahrzeugteile GmbH & Co. Kommanditgesellschaft, Bamberg, 96052 Bamberg (DE)
(72) Erfinder: HERTHAN, Bernd, 96247 Michelau (DE); WAGNER, Burkhard, 96237 Ebersdorf (DE); FEUSTEL, Armin, 96050 Bamberg (DE); SCHIEGEL, Stefan, 96231 Bad Staffelstein (DE); BÜHLER, Matthias, 96103 Hallstadt (DE)
(74) Vertreter: FDST Patentanwälte
(86) Internationale Anmeldenummer: PCT/EP2011/006020
(87) Internationale Veröffentlichungsnummer: WO 2012/076130

(56) Entgegenhaltungen:
- WO-A1-2010/070218
- US-A1- 2002 006 139

## Beschreibung

Die Erfindung betrifft ein Verfahren zum Betrieb eines Bordnetzes eines Kraftfahrzeugs, mit einem Master-Steuergerät und mit einem Slave-Steuergerät, sowie ein nach diesem Verfahren arbeitendes Bussystem.

Innerhalb eines Kraftfahrzeugs findet eine Vielzahl von Steuergeräten Verwendung, von denen jedes üblicherweise mit mindestens einem zugeordneten Aktuator und/oder Sensor verbunden ist. Das entsprechende Steuergerät steuert den Aktuator bzw. wertet die gelieferten Sensordaten aus, wobei die Steuerung beispielsweise anhand der Sensordaten erfolgt. Häufig erfolgt jedoch die Steuerung aufgrund von Anforderungen, die von einem weiteren Steuergerät abgerufen werden. Hierfür ist es notwendig, die Steuergeräte mittels einer Datenleitung zu verbinden.

Zur Reduzierung der Verkabelung innerhalb des Kraftfahrzeugs sind die Steuergeräte in der Regel mittels eines Hauptbus-Systems, beispielsweise eines CAN-Bus-Systems, verbunden. Hierbei existiert eine zentrale Datenleitung, mit der eine Anzahl von Steuergeräten verbunden ist. Auf dieser Datenleitung werden Botschaften übertragen. Anhand einer Angabe von einem Adressaten oder eines Adressatenkreises der Botschaft ist gewährleistet, dass das jeweils intendierte Steuergerät auf die Botschaft reagiert.

Üblicherweise werden mehrere der Steuergeräte zu einem Untersystem zusammengefasst, beispielsweise Türsteuergeräte des Kraftfahrzeugs. Da in der Regel die Untergruppen im Vergleich zum gesamten Bordnetz homogen aufgebaut sind, kann innerhalb des Untersystems ein Bus-System zum Einsatz kommen, das zwar nicht die Bandbreite und Flexibilität des Hauptbus-Systems aufweist, jedoch kostengünstiger zu fertigen ist. Eines der Steuergeräte des Untersystems übernimmt dann häufig die Steuerung des Subbus-Systems. Dieses Steuergerät wird als Master-Steuergerät bezeichnet.

Aus der EP 0 829 786 A2 ist eine Verschaltung von einem Mastersteuergerät mit mindestens einem weiteren Steuergerät bekannt, wobei das Mastersteuergerät die Kommunikation mit weiteren Komponenten des Bordnetzes übernimmt. Zur Energieeinsparung werden von dem Mastersteuergerät alle Steuergeräte des Untersystems in einen Ruhestrom-Verbrauchszustand versetzt, sobald keine aktuellen Anforderungen an das Untersystem bestehen. Das gesamte Untersystem wird nach einer Anforderung an eines der Steuergeräte wieder in einen normalen Verbrauchszustand versetzt.

Aus der US 2002/0006139 A1 ist ein Kommunikationssystem bekannt, das eine Anzahl von Netzwerken aufweist, die über ein Data Relais miteinander verbunden sind. Jedes dieser Netzwerke schaltet in einen Schlafmodus, falls innerhalb einer bestimmten Zeitspanne kein Ereignis auftaucht. Sofern Daten zwischen zwei Netzwerken ausgetauscht werden sollen, werden diese über die Data Relais Unit geleitet. Hierfür wird von dem Sender, der Teilnehmer eines der Netzwerke ist, zunächst eine Anforderung an die Data Relais Unit geschickt, die die Data Relais Unit veranlasst, ein Wake-up-Frame in zumindest ein weiteres Netzwerk zu senden, in das die Nachricht versandt werden soll. Aufgrund des Wake-up-Frames werden die Teilnehmer des weiteren Netzwerks veranlasst in einen Betriebsmodus zu wechseln.

Der Erfindung liegt die Aufgabe zugrunde, ein energieeffizientes Verfahren zum Betreiben eines Bordnetzes sowie ein energieeffizientes Bus-System anzugeben.

Bezüglich des Verfahrens wird diese Aufgabe erfindungsgemäß gelöst durch die Merkmale des Anspruchs 1. Vorteilhafte Weiterbildungen und Ausgestaltungen sind Gegenstand der hierauf rückbezogenen Unteransprüche.

Demnach kommunizieren ein Master-Steuergerät und ein Slave-Steuergerät über ein Subbus-System miteinander, wobei das Master-Steuergerät über ein Hauptbus-System mit einer weiteren Bordnetzkomponente eines Bordnetzes eines Kraftfahrzeugs kommuniziert. Besteht eine aktuelle Anforderung an das Slave-Steuergerät, so wird dieses in einen Betriebsmodus versetzt und das Master-Steuergerät schaltet in einen Durchleitemodus, in dem das Master-Steuergerät die Kommunikation zwischen dem Slave-Steuergerät und der Bordnetzkomponente koordiniert.

Die aktuelle Anforderung an das Slave-Steuergerät ist beispielsweise ein Signal eines mit dem Slave-Steuergerät verbundenen Sensors oder eine Funktionsanforderung an einen mit dem Slave-Steuergerät verbundenen Aktuator. Die Funktionsanforderung stammt beispielsweise von dem Sensor, dem Master-Steuergerät oder der Bordnetzkomponente. Falls die Funktionsanforderung von der Bordnetzkomponente stammt, so wird die Anforderung zuerst an das Master-Steuergerät gesandt, welches die Anforderung an das Slave-Steuergerät weiterleitet. Insbesondere übersetzt das Master-Steuergerät die mittels des innerhalb des Hauptbus-Systems verwendeten Protokolls formulierte Anforderung in eine Anforderung, die konform zu dem innerhalb des Subbus-Systems verwendeten Protokoll ist, falls innerhalb des Subbus-Systems ein anderes Protokoll verwendet wird als in dem Hauptbus-System. Eine Rückmeldung des Slave-Steuergeräts an die Bordnetzkomponente oder das Signal des Sensors wird zuerst an das Master-Steuergerät gesandt, welches die Botschaft konform zum Hauptbus-System an die Bordnetzkomponente weiterleitet.

Im Betriebsmodus ist das Slave-Steuergerät in der Lage, eine an dieses gestellte Anforderung unverzüglich zu bearbeiten, solange keine weiteren Anforderungen aktuell von diesem bearbeitet werden, und wenn das Slave-Steuergerät darauf ausgelegt ist, diese Anforderung zu bearbeiten.

Falls keine aktuellen Anforderungen an das Slave-Steuergerät vorliegen, wird das Slave-Steuergerät in einen Schlafmodus versetzt. Beispielsweise sendet hierfür das Master-Steuergerät einen speziellen Befehl oder das Slave-Steuergerät registriert, dass keine Anforderungen vorliegen und schaltet selbstständig in den Schlafmodus. Im Schlafmodus weist das Slave-Steuergerät einen geringeren Energieverbrauch als im Betriebsmodus auf. Beispielsweise werden in dem Schlafmodus Funktionen und/oder periphere Bausteine des Slave-Steuergeräts, wie beispielsweise ein Flashspeicher, zumindest teilweise abgeschalten, und/oder die Taktfrequenz eines in dem Slave-Steuergerät enthaltenen Prozessors wird abgesenkt, oder der Prozessor wird vollständig abgeschaltet.

Beispielsweise ist aufgrund derartiger Energieeinsparmaßnahmen das Slave-Steuergerät nicht in der Lage, eine an dieses gestellte Anforderung unverzüglich zu bearbeiten, da hierfür beispielsweise zunächst die Energieversorgung des gesamten Slave-Steuergerät wiederhergestellt und insbesondere die Taktfrequenz angehoben werden muss. Sobald sich das Slave-Steuergerät im Schlafmodus befindet, schaltet das Master-Steuergerät in einen Übernahmemodus.

Falls die Bordnetzkomponente an das Slave-Steuergerät eine Anfrage sendet, die keine aktuelle Anforderung an das Slave-Steuergerät ist, während sich dieses im Schlafmodus befindet, so beantwortet das Master-Steuergerät die Anfrage und belässt das Slave-Steuergerät im Schlafmodus. Insbesondere leitet das Master-Steuergerät die Anfrage nicht an das Slave-Steuergerät weiter. Beispielsweise ist die Anfrage eine Anfrage in welcher Position sich der dem Slave-Steuergerät zugeordnete Aktuator befindet. Zweckmäßigerweise sendet das Slave-Steuergerät alle Statusinformationen der diesem zugeordneten Sensoren und Aktuatoren an das Master-Steuergerät, bevor dieses in den Schlafmodus schaltet.

Mittels des Verfahrens ist es ermöglicht, das Slave-Steuergerät über einen vergleichsweise großen Zeitraum in dem energiesparenden Schlafmodus zu belassen. Dabei erhält die Bordnetzkomponente Antworten auf Anfragen an das Slave-Steuergerät in einer kürzeren Zeitspanne, als wenn das Master-Steuergerät keinen Übernahmemodus aufweist, da das Slave-Steuergerät nicht aufgeweckt werden muss und die Koordination der Kommunikation durch das Master-Steuergerät entfällt.

Geeigneterweise simuliert das in den Übernahmemodus geschaltete Master-Steuergerät während der Kommunikation mit der Bordnetzkomponente, dass sich das Slave-Steuergerät im Betriebsmodus befindet. Mit anderen Worten kann die Bordnetzkomponente nicht unterscheiden, ob die Antwort auf eine Anfrage an das Slave-Steuergerät von dem Master-Steuergerät oder dem Slave-Steuergerät selbst stammt. So ist es möglich, in einem bereits bestehenden Bordnetz lediglich eine Untergruppe von Steuergeräten mit dem Verfahren zu betreiben, ohne Anpassungen an der Bordnetzkomponente oder weiteren Bausteinen des Bordnetzes vornehmen zu müssen.

Beispielsweise weist das Slave-Steuergerät einen nicht wakeup-fähigen Eingang auf. Ein nicht wakeup-fähiger Eingang bezeichnet einen Eingang, an den eine Komponente, wie zum Beispiel ein Sensor, angeschlossen ist, wobei diese Komponente den Schlafmodus des Slave-Steuergeräts nicht beenden, also das Slave-Steuergerät nicht in den Betriebsmodus versetzen kann.

Vorteilhafterweise fragt das Slave-Steuergerät, nachdem es sich eine bestimmte Zeitspanne in dem Schlafmodus befunden hat, den nicht wakeup-fähigen Eingang ab, ob eine aktuelle Anforderung besteht. Hierdurch ist gewährleistet, dass das Slave-Steuergerät alle Anforderungen an sich selbst bearbeitet. Geeigneterweise wiederholt das Slave-Steuergerät die Abfrage jeweils nach Ablauf der Zeitspanne, solange sich das Slave-Steuergerät in dem Schlafmodus befindet, und solange keine Anforderung an dem nicht wakeup-fähigen Eingang besteht. Beispielsweise beträgt die Zeitspanne zwischen 5ms und 15ms und insbesondere 10ms. Auf diese Weise ist ein energieeffizienter Betrieb des Slave-Steuergeräts möglich, wobei Anforderungen an dieses ausnahmslos bearbeitet werden.

Zweckmäßigerweise schaltet das Master-Steuergerät in einen Schlafmodus, sobald keine aktuelle Anforderung an das Master-Steuergerät besteht. Eine aktuelle Anforderung an das Master-Steuergerät ist beispielsweise ein Signal eines mit dem Master-Steuergerät verbundenen Sensors oder eine Funktionsanforderung an einen mit dem Master-Steuergerät verbundenen Aktuator. Weiterhin ist eine derartige Anforderung insbesondere die Koordinierung der Kommunikation zwischen dem Slave-Steuergerät und der Bordnetzkomponente sowie die Beantwortung der Anfragen an das Slave-Steuergerät.

Mittels des Schaltens des Master-Steuergeräts in den Schlafmodus ist es ermöglicht, eine weitere Stromverbrauchsreduzierung zu erreichen. Beispielsweise werden in dem Schlafmodus Funktionen und/oder periphere Bausteine des Master-Steuergeräts, wie z. B. ein Flashspeicher, zumindest teilweise abgeschalten. Insbesondere wird die Taktfrequenz des Master-Steuergeräts im Schlafmodus im Vergleich zum Durchleitemodus reduziert. Der Energieverbrauch des Master-Steuergeräts ist im Wesentlichen proportional zur Taktfrequenz, weshalb eine Reduzierung eine effektive Energieeinsparung darstellt. Die Taktfrequenz ist insbesondere auf null reduziert.

Weiterhin ist beispielsweise im Übernahmemodus die Taktfrequenz des Master-Steuergeräts geringer als im Durchleitemodus, da über das Subbus-System keine Kommunikation stattfindet und somit keine Rechenkapazität für die Koordination der Kommunikation des Slave-Steuergeräts benötigt wird.

Beispielsweise übernehmen das Master-Steuergerät und/oder das Slave-Steuergerät zumindest teilweise Aufgaben eines Türsteuergeräts des Kraftfahrzeugs. Typische Aufgaben eines Türsteuergeräts sind zum Beispiel das Steuern und Überwachen eines Türschlosses, eines Fensterhebers, einer Beleuchtung einer Tür, eines Rückspiegels oder eines zur Tür benachbart angeordneten Sitzes.

Bezüglich des Bus-Systems wird die genannte Aufgabe erfindungsgemäß gelöst durch die Merkmale des Anspruchs 8. Das nach dem erfindungsgemäßen Verfahren arbeitende Bussystem eines Bordnetzes eines Kraftfahrzeugs weist ein Hauptbus-System, ein Subbus-System, ein Master-Steuergerät, sowie mindestens ein Slave-Steuergerät auf.

In einer bevorzugten Ausführungsform handelt es sich bei dem Hauptbus-System um ein CAN-Bus-System oder ein Flexray-Bus-System. Das Subbus-System ist insbesondere ein Lin-Bus-System. Zweckmäßigerweise ist das Hauptbus-System ein CAN-Bus-System und das Subbus-System ein Lin-Bus-System, da diese im Automobilbau vergleichsweise weit verbreitet sind und eine spezielle Anpassung der Kabel des insbesondere bereits bestehenden Bordnetzes oder weiterer Steuergeräte entfällt.

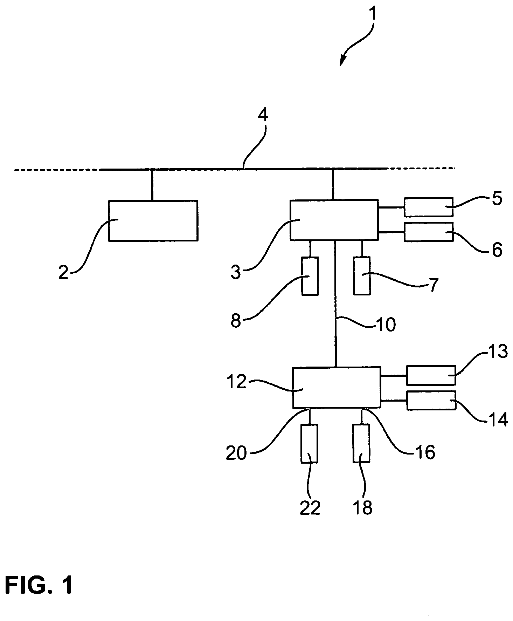

Nachfolgend wird ein Ausführungsbeispiel der Erfindung anhand einer Zeichnung näher erläutert. Darin zeigt die einzige Figur schematisch ein nach dem erfindungsgemäßen Verfahren arbeitendes Bordnetz eines Kraftfahrzeugs.

In der Figur ist ein Bordnetz 1 eines Kraftfahrzeugs mit einer Bordnetzkomponente 2 und einem Master-Steuergerät 3 dargestellt, die über ein Hauptbus-System 4 miteinander kommunizieren. Das Hauptbus-System 4 ist beispielsweise ein CAN-Bus-System und die Bordnetzkomponente 2 ist ein Kombisteuergerät. Insbesondere ist das Master-Steuergerät 3 ein Türsteuergerät und steuert beispielsweise mittels eines Aktuators 5 eine Beleuchtung einer Fahrertür des Kraftfahrzeugs und einen in der Fahrertür vorhandenen elektrischen Fensterheber sowie mittels eines Aktuators 6 ein in der Fahrertür integriertes Schloss. An dem Master-Steuergerät 3 sind ein Sensor 7 und ein Sensor 8 angeschlossen, der den Status des Schlosses bzw. eine Öffnung der Fahrertür überwacht.

Mit dem Master-Steuergerät 3, das einen Durchleitemodus, einen Übernahmemodus und einen Schlafmodus aufweist, ist über ein Subbus-System 10, welches insbesondere ein LIN-Bus-System ist, ein Slave-Steuergerät 12 verbunden, das einen Betriebsmodus und einen Schlafmodus aufweist. Das Slave-Steuergerät 12 ist einer weiteren Tür des Kraftfahrzeugs zugeordnet. Insbesondere steuert das Slave-Steuergerät 12 ein in dieser Tür integriertes Schloss sowie einen dieser Tür zugeordneten elektrischen Fensterheber und eine Beleuchtung der Tür. Die Steuerung der Beleuchtung und des Schlosses erfolgt mittels eines Aktuators 13 bzw. mittels eines Aktuators 14, die jeweils mit dem Slave-Steuergerät 12 verbunden sind. An einem nicht wakeup-fähigen Eingang 16 ist ein Sensor 18 an dem Slave-Steuergerät 12 angeschlossen, der den Status des Schlosses überprüft. An einem wakeup-fähigen Anschluss 20 ist ein Sensor 22 an dem Slave-Steuergerät 12 angeschlossen, der die Öffnung der Tür überwacht.

Tätigkeiten, die mittels des Slave-Steuergeräts 12 gesteuert werden, sowie Sensordaten, die mittels des Slave-Steuergeräts 12 erfasst und verarbeitet werden, und auch die Kommunikation über das Subbus-System 10, die das Slave-Steuergerät 12 betrifft, werden als aktuelle Anforderungen an das Slave-Steuergerät 12 bezeichnet. Die Abarbeitung der aktuellen Anforderungen an das Slave-Steuergerät 12 findet im Betriebsmodus des Slave-Steuergeräts 12 statt. Dies bedeutet, dass ausnahmslos alle für eine Abarbeitung der aktuellen Anforderungen notwendigen Funktionen und Komponenten des Slave-Steuergeräts 12 aktiviert und mit Energie versorgt sind, wobei die Komponenten und Funktionen derart konfiguriert sind, dass eine zeitsparende Abarbeitung gewährleistet ist.

Sobald keine aktuellen Anforderungen an das Slave-Steuergerät 12 bestehen, sendet das Master-Steuergerät 3 eine Einschlafanforderung an das Slave-Steuergerät 12, woraufhin das Slave-Steuergerät 12 die aktuellen Statusinformationen der mit dem Slave-Steuergerät 12 verbundenen Sensoren 18, 22 sowie der Aktuatoren 13, 14 über das Subbus-System 10 an das Master-Steuergerät 3 schickt. Daraufhin schaltet das Slave-Steuergerät 12 in den Schlafmodus, während das Master-Steuergerät 3 in den Übernahmemodus schaltet.

Im Schlafmodus werden Funktionen und periphere Bausteine, wie z. B. ein Flashspeicher, des Slave-Steuergeräts 12 abgeschaltet und ein in dem Slave-Steuergerät 12 enthaltener Hauptprozessors wird abgeschaltet oder zumindest dessen Taktfrequenz abgesenkt. Mittels dieses Vorgehens verbraucht das Slave-Steuergerät 12 im Schlafmodus weniger Energie als im Betriebsmodus.

Das Slave-Steuergerät 12 wird beispielsweise mittels einer über das Subbus-System 10 geschickten Aufwach- oder Tätigkeitsanforderung oder mittels eines Sensorwertes des Sensors 22, der an dem wakeup-fähigen Eingang 20 des Slave-Steuergeräts 12 angeschlossen ist, erneut in den Betriebsmodus versetzt. Zur Überprüfung, ob an dem Sensor 18, der an dem nicht wakeup-fähigen Eingang 22 des Slave-Steuergeräts 12 angeschlossen ist, eine aktuelle Anforderung an das Slave-Steuergerät 12 besteht, fragt das Slave-Steuergerät 12 selbstständig den Status des Sensors 18 ab. Bei einer Veränderung des Status des Sensors 18 wechselt das Slave-Steuergerät 12 in den Betriebsmodus und teilt dies dem Master-Steuergerät 3 mit. Bei keiner Veränderung verbleibt das Slave-Steuergerät 12 im Schlafmodus. Jeweils nach Ablauf der Zeitspanne wiederholt das Slave-Steuergerät 12 die Abfrage. Diese Überprüfung des Sensors 18 findet beispielsweise alle 10ms statt.

Befinden sich das Slave-Steuergerät 12 im Schlafmodus sowie das Master-Steuergerät 3 in dem Übernahmemodus und bestehen ferner keine aktuellen Anforderungen an das Master-Steuergerät 3, so schaltet das Master-Steuergerät 3 in den Schlafmodus. Tätigkeiten, die mittels des Master-Steuergeräts 3 gesteuert werden, sowie Sensordaten, die mittels des Master-Steuergeräts 3 erfasst und verarbeitet werden, sowie die Kommunikation über das Subbus-System 10 und die Kommunikation über das Hauptbus-System 4, die das Master-Steuergerät 3 oder das Slave-Steuergerät 12 betrifft, werden als aktuelle Anforderungen an das Master-Steuergerät 3 bezeichnet.

Im Schlafmodus werden Funktionen und periphere Bausteine, wie ein Flashspeicher, des Master-Steuergeräts 3 abgeschaltet und die Taktfrequenz eines in dem Master-Steuergerät 3 enthaltener Hauptprozessors wird reduziert. Mittels dieses Vorgehens verbraucht das Master-Steuergerät 3 im Schlafmodus weniger Energie als im Durchleite- oder Übernahmemodus.

Fragt die Bordnetzkomponente 2 ab, ob die dem Slave-Steuergerät 12 zugeordneten Tür offen oder geschlossen ist, so beendet das Master-Steuergerät 3 den Schlafmodus und wechselt in den Übernahmemodus. Da die Anfrage keine aktuelle Anforderung an das Slave-Steuergerät 12 darstellt, leitet das Master-Steuergerät 3 die Anfrage nicht an das Slave-Steuergerät 12 weiter, sondern belässt dieses im Schlafmodus. Das Master-Steuergerät 3 sendet der Bordnetzkomponente 2 den Status des Türöffnungssensors 22, den das Slave-Steuergerät 12 mitgeteilt hat, bevor das Slave-Steuergerät 12 in den Schlafmodus gewechselt ist. Dabei signiert das Master-Steuergerät 3 die Antwort mit der Kennung des Slave-Steuergeräts 12 derart, dass die Bordnetzkomponente 2 nicht unterschieden kann, ob das Slave-Steuergerät 12 im Betriebsmodus oder im Schlafmodus ist. Im Anschluss an das Versenden der Antwort schaltet das Master-Steuergerät 3 erneut in den Schlafmodus.

Da keine Kommunikation über das Subbus-System 10 stattfindet, wenn sich das Master-Steuergerät 3 im Übernahmemodus befindet, ist es nicht erforderlich, dass Funktionen und periphere Bausteine des Master-Steuergeräts 3, die für diese Kommunikation zuständig sind, mit Energie versorgt werden. Daher werden beispielsweise diese Funktionen und Bausteine im Übernahmemodus abgeschaltet und optional die Taktfrequenz des in dem Master-Steuergerät 3 enthaltenem Hauptprozessors im Vergleich zum Durchleitemodus reduziert.

Schickt die Bordnetzkomponente 2 die Aufforderung, dass die beiden Türen, die mittels des Master-Steuergeräts 3 und des Slave-Steuergeräts 12 gesteuert werden, entriegelt werden sollen, so schaltet das Master-Steuergerät 3 in den Durchleitemodus, da die Aufforderung auch eine aktuelle Anforderung an das Slave-Steuergerät 12 ist. Das Master-Steuergerät 3 entriegelt mittels des Aktuators 6 das in der Fahrertür integrierte Schloss und überprüft die Ausführung mittels des Sensors 7. Optional sendet das Master-Steuergerät 3 eine Bestätigung der Ausführung an die Bordnetzkomponente 2 über das Hauptbus-System 4.

Weiterhin formuliert das Master-Steuergerät 3 die Aufforderung der Bordnetzkomponente 2, die konform zu dem Hauptbus-System 4 formuliert ist, in eine Aufforderung an das Slave-Steuergerät 12 um, die konform zu dem Subbus-System 10 ist, und sendet diese sowie optional die Aufwachanforderung an das Slave-Steuergerät 12. Aufgrund der Aufforderungen wechselt das Slave-Steuergerät 12 in den Betriebsmodus und betätigt den Aktuator 14, der die Tür entriegelt, die dem Slave-Steuergerät 12 zugeordnet ist. Mittels des Sensors 18 überprüft das Slave-Steuergerät 12, ob das Schloss entriegelt ist. Nach dem Entriegeln der Tür sendet das Slave-Steuergerät 12 eine Bestätigung des Entriegelns an die Bordnetzkomponente 2. Hierfür sendet das Slave-Steuergerät 12 die Bestätigung an das Master-Steuergerät 3 über das Subbus-System 10. Das Master-Steuergerät 3 formuliert die Bestätigung konform zu dem Hauptbus-System 4 um und sendet diese an die Bordnetzkomponente 2 weiter.

Daraufhin sendet das Master-Steuergerät 3 an das Slave-Steuergerät 12 die Einschlafanforderung, wobei das Slave-Steuergerät 12 dem Master-Steuergerät 3 wiederum zunächst den Status der an dieses angeschlossenen Sensoren 18, 22 und der Aktuatoren 13, 14 übermittelt, bevor dieses in den Schlafmodus und das Master-Steuergerät 3 in den Übernahmemodus schaltet. Besteht keine aktuelle Anforderung an das Master-Steuergerät 3, so schaltet dieses ebenfalls in den Schlafmodus.

Wird die Tür, die dem Slave-Steuergerät 12 zugeordnet ist, geöffnet, so registriert der Sensor 22 dies und weckt das Slave-Steuergerät 12 auf. Das Slave-Steuergerät 12 aktiviert beispielsweise die Beleuchtung der Tür mittels des Aktuators 13 und sendet dem Master-Steuergerät 3 den Status des Sensors 22 und teilt mit, dass das Slave-Steuergerät 12 den Aktuator 13 aktiviert hat. Das Master-Steuergerät 3 schaltet in den Durchleitemodus.

Beispielsweise aktiviert das Master-Steuergerät 3 die Beleuchtung der Fahrertür, die dem Master-Steuergerät 3 zugeordnet ist, mittels des Aktuators 5 und sendet an die Bordnetzkomponente 2, dass diejenige Tür geöffnet wurde, die dem Slave-Steuergerät 12 zugeordnet ist, und dass die Beleuchtungen beider Türen aktiviert wurden. Sobald die Tür geschlossen wird, sendet das Slave-Steuergerät 12 dies dem Master-Steuergerät 3.

Im Anschluss an eine vorgegebene Zeitspanne, beispielsweise nach 5s, beendet das Master-Steuergerät 3 die Beleuchtung der Fahrertür und sendet an das Slave-Steuergerät 12, dass dieses ebenfalls die Beleuchtung beenden soll. Weiterhin versetzt das Master-Steuergerät 3 das Slave-Steuergerät 12 in den Schlafmodus, wenn keine weiteren Anforderungen an das Slave-Steuergerät 12 bestehen, wobei das Slave-Steuergerät 12 wiederum den Status der dem Slave-Steuergerät 12 zugeordneten Sensoren 18, 22 und der Aktuatoren 13, 14 an das Master-Steuergerät 3 mitteilt, bevor diese in den Schlafmodus und das Master-Steuergerät 3 in den Übernahmemodus schaltet.

### Bezugszeichenliste

- 1: Bordnetz
- 2: Bordnetzkomponente
- 3: Master-Steuergerät
- 4: Hauptbus-System
- 5: Aktuator
- 6: Aktuator
- 7: Sensor
- 8: Sensor
- 10: Subbus-System
- 12: Slave-Steuergerät
- 13: Aktuator
- 14: Aktuator
- 16: nicht wakeup-fähiger Eingang
- 18: Sensor
- 20: wakeup-fähiger Eingang
- 22: Sensor

## Patentansprüche

1. Verfahren zum Betrieb eines Bordnetzes (1) eines Kraftfahrzeugs, mit einem Master-Steuergerät (3) und mit einem Slave-Steuergerät (12), bei dem das Master-Steuergerät (3) über ein Subbus-System (10) mit dem Slave-Steuergerät (12) und über ein Hauptbus-System (4) mit einer weiteren Bordnetzkomponente (2) kommuniziert, wobei in Abhängigkeit von aktuellen Anforderungen an das Slave-Steuergerät (12)
- entweder das Slave-Steuergerät (12) in einen Betriebsmodus versetzt wird und das Master-Steuergerät (3) in einen Durchleltemodus schaltet, in dem das Master-Steuergerät (3) die Kommunikation zwischen dem Slave-Steuergerät (12) und der Bordnetzkomponente (2) koordiniert,
- oder das Slave-Steuergerät (12) in einen Schlafmodus versetzt wird und das Master-Steuergerät (3) in einen Übernahmemodus schaltet, in dem das Master-Steuergerät (3) Anfragen der Bordnetzkomponente (2) an das Slave-Steuergerät (12) beantwortet, wobei das Slave-Steuergerät (12) im Schlafmodus belassen wird.

2. Verfahren nach Anspruch 1,
**dadurch gekennzeichnet,**
**dass** Im Übernahmemodus das Master-Steuergerät (3) während der Kommunikation mit der Bordnetzkomponente (2) simuliert, dass sich das Slave-Steuergerät (12) im Betriebsmodus befindet.

3. Verfahren nach Anspruch 1 oder 2,
**dadurch gekennzeichnet,**
**dass** im Schlafmodus das Slave-Steuergerät (12) nach einer bestimmten Zeitspanne einen nicht wakeup-fähigen Eingang (16) abfragt, ob eine aktuelle Anforderung besteht.

4. Verfahren nach Anspruch 3,
**dadurch gekennzeichnet,**
**dass** das Slave-Steuergerät (12) die Abfrage jeweils nach Ablauf der bestimmten Zeitspanne periodisch wiederholt, solange es sich im Schlafmodus befindet.

5. Verfahren nach einem der Ansprüche 1 bis 4,
**dadurch gekennzeichnet,**
**dass** das Master-Steuergerät (3) in einen Schlafmodus schaltet, wenn keine aktuelle Anforderung an das Master-Steuergerät (3) besteht.

6. Verfahren nach Anspruch 5,
**dadurch gekennzeichnet,**
**dass** die Taktfrequenz des Master-Steuergeräts (3) im Schlafmodus im Vergleich zum Durchleitemodus reduziert wird.

7. Verfahren nach einem der Ansprüche 1 bis 6,
**dadurch gekennzeichnet,**
**dass** das Master-Steuergerät (3) und/oder das Slave-Steuergerät (12) zumindest teilweise Aufgaben eines Türsteuergeräts übernehmen.

8. Nach dem Verfahren nach einem der Ansprüche 1 bis 7 arbeitendes Bussystem eines Bordnetzes (1) eines Kraftfahrzeugs, mit einem Hauptbus-System (4), und mit einem Subbus-System (10), und mit einem Master-Steuergerät (3), sowie mit mindestens einem Slave-Steuergerät (12).

9. Bussystem eines Bordnetzes (1) nach Anspruch 8,
**dadurch gekennzeichnet,**
**dass** das Hauptbus-System (4) ein CAN-Bus-System oder einem Flexray-Bus-System und/oder das Subbus-System (10) ein Lin-Bus-System ist.

## Claims

1. Method for operating an on-board electrical system (1) of a motor vehicle, having a master control device (3) and having a slave control device (12), in which the master control device (3) communicates with the slave control device (12) via a subsidiary bus system (10) and with a further on-board electrical system component (2) via a main bus system (4), wherein, depending on the current demands of the slave control device (12),
- either the slave control device (12) is moved into an operating mode and the master control device (3) switches to a conducting mode, in which the master control device (3) coordinates the communication between the slave control device (12) and the on-board electrical system component (2),
- or the slave control device (12) is moved into a sleep mode and the master control device (3) switches to a takeover mode, in which the master control device (3) answers requests of the on-board electrical system component (2) to the slave control device (12), wherein the slave control device (12) is left in the sleep mode.

2. Method according to claim 1,
**characterised in that**,
in the takeover mode, during the communication with the on-board electrical system component (2), the master control device (3) simulates that the slave control device (12) is in the operating mode.

3. Method according to claim 1 or 2,
**characterised in that**,
in the sleep mode, the slave control device (12) requests an input (16) without wakeup capability after a certain time period as to whether there is a current demand.

4. Method according to claim 3,
**characterised in that**
the slave control device (12) periodically repeats the request, in each case after the duration of the determined time period, as long as it is in the sleep mode.

5. Method according to one of claims 1 to 4,
**characterised in that**
the master control device (3) switches to a sleep mode when there is no current demand of the master control device (3).

6. Method according to claim 5,
**characterised in that**
the clock frequency of the master control device (3) is reduced in the sleep mode in comparison to the conducting mode.

7. Method according to one of claims 1 to 6,
**characterised in that**
the master control device (3) and/or the slave control device (12) at least partially takes on the tasks of a door control device.

8. Bus system of an on-board electrical system (1) of a motor vehicle, said bus system functioning according to the method according to one of claims 1 to 7, having a main bus system (4), and having a subsidiary bus system (10), and having a master control device (3), and having at least one slave control device (12).

9. Bus system of an on-board electrical system (1) according to claim 8,
**characterised in that**
the main bus system (4) is a CAN bus system or a FlexRay bus system and/or the subsidiary bus system (10) is a LIN bus system.

## Revendications

1. Procédé de fonctionnement d'un réseau de bord (1) d'un véhicule automobile, avec un appareil de commande maître (3) et avec un appareil de commande esclave (12), où l'appareil de commande maître (3) communique avec l'appareil de commande esclave (12) via un système de bus secondaire (10) et avec un autre composant (2) de réseau de bord via un système de bus principal (4), où, en fonction d'exigences actuelles adressées à l'appareil de commande esclave (12)
- soit l'appareil de commande esclave (12) est passé dans un mode de service et commute l'appareil de commande maître (3) vers un mode de transit où l'appareil de commande maître (3) coordonne la communication entre l'appareil de commande esclave (12) et le composant (2) de réseau de bord,
- soit l'appareil de commande esclave (12) est passé dans un mode de veille et commute l'appareil de commande maître (3) dans un mode de transfert où l'appareil de commande maître (3) répond à des demandes du composant (2) de réseau de bord à l'appareil de commande esclave (12), l'appareil de commande esclave (12) étant laissé en mode de veille.

2. Procédé selon la revendication 1,
**caractérisé en ce que**
en mode de transfert, l'appareil de commande maître (3) simule que l'appareil de commande esclave (12) se trouve en mode de service pendant la communication avec le composant (2) de réseau de bord.

3. Procédé selon la revendication 1 ou la revendication 2,
**caractérisé en ce que**
en mode de veille l'appareil de commande esclave (12) demande après un intervalle temporel défini si une exigence actuelle est présentée à une entrée (16) inapte à une mise en éveil.

4. Procédé selon la revendication 3,
**caractérisé en ce que**
tant qu'il se trouve en mode de veille, l'appareil de commande esclave (12) renouvelle périodiquement la demande à l'expiration de l'intervalle temporel défini.

5. Procédé selon l'une des revendications 1 à 4,
**caractérisé en ce que**
l'appareil de commande maître (3) commute vers un mode de veille si aucune exigence actuelle n'est adressée à l'appareil de commande maître (3).

6. Procédé selon la revendication 5,
**caractérisé en ce que**
la fréquence d'horloge de l'appareil de commande maître (3) en mode de veille est réduite en comparaison du mode de transit.

7. Procédé selon l'une des revendications 1 à 6,
**caractérisé en ce que**
l'appareil de commande maître (3) et/ou l'appareil de commande esclave (12) assument au moins en partie les tâches d'un contrôleur de porte.

8. Système de bus d'un réseau de bord (1) d'un véhicule automobile fonctionnant suivant le procédé selon l'une des revendications 1 à 7, avec un système de bus principal (4), et avec un système de bus secondaire (10), et avec un appareil de commande maître (3), ainsi qu'au moins un appareil de commande esclave (12).

9. Système de bus d'un réseau de bord (1) selon la revendication 8,
**caractérisé en ce que**
le système de bus principal (4) est un système de bus CAN ou un système de bus Flexray et/ou **en ce que** le système de bus secondaire (10) est un système de bus Lin.
